# EUROPÄISCHE PATENTSCHRIFT

(11) **EP 3 929 110 B1**
(45) Veröffentlichungstag und Bekanntmachung des Hinweises auf die Patenterteilung: **02.11.2022**
(21) Anmeldenummer: 21169190.2
(22) Anmeldetag: 19.04.2021
(51) Int. Cl.: B65G 1/08

(54) **DURCHLAUFREGAL MIT MINDESTENS EINEM DURCHLAUFKANAL FÜR DEN TRANSPORT VON TRANSPORTGÜTERN**
FLOW RACK WITH AT LEAST ONE CHANNEL FOR TRANSPORTING GOODS
ETAGERE INCLINEE POURVUE D'AU MOINS UN CANAL POUR LE TRANSPORT DE MARCHANDISES

(30) Priorität: 22.06.2020 DE 202020103587 U
(43) Veröffentlichungstag der Anmeldung: 29.12.2021
(73) Patentinhaber: Schmale, Ehrard, 34479 Breuna-Wettesingen (DE)
(72) Erfinder: Schmale, Ehrard, 34479 Breuna-Wettesingen (DE)
(74) Vertreter: Walther Bayer Faber Patentanwälte PartGmbB

(56) Entgegenhaltungen:
- EP-A1- 2 500 294

## Beschreibung

Die Erfindung betrifft ein Durchlaufregal mit mindestens einem Durchlaufkanal für den Transport von Transportgütern, wobei der mindestens eine Durchlaufkanal mindestens zwei seitlich beabstandet zueinander angeordnete erste und zweite Rollenbahnen aufweist, wobei eine jede Rollenbahn zumindest eine Bremsrolle aufweist.

Durchlaufregale sind aus dem Stand der Technik hinreichend bekannt. In einem solchen Durchlaufregal werden entlang einer schiefen Ebene in einem oder mehreren Durchlaufkanälen Transportgüter von einem oberen Ende (Aufgabeseite) zu einem unteren Ende (Entnahmeseite) transportiert. Insofern handelt es sich bei einem Durchlaufregal um eine sogenannte Schwerkraftfördereinrichtung. Transportgüter können befüllte oder teilbefüllte Paletten, aber auch leere oder befüllte Transportboxen sein. Das heißt beispielsweise in Bezug auf die zuvorgenannten Transportboxen, dass in dem einzelnen Durchlaufkanal unterschiedlich schwere Transportboxen transportiert oder gefördert werden. Ein Durchlaufregal nach dem Oberbegriff des Anspruchs 1 ist zum Beispiel aus der EP 2 500 294 A1 bekannt.

Es wurde bereits darauf hingewiesen, dass ein Durchlaufkanal mindestens zwei parallel zueinander und beabstandet zueinander angeordnete Rollenbahnen aufweist, die entlang einer schiefen Ebene verlaufen. Die Rollenbahnen weisen, um die Geschwindigkeit der Transportgüter zu regulieren, üblicherweise eine Mehrzahl von Bremsrollen auf. Bremsrollen sind ebenfalls bekannt, wobei sich in den Bremsrollen gewöhnlich ein Planetengetriebe mit einem bestimmten Losbrechmoment befindet. Das heißt, die Rollenbahnen weisen Tragrollen wie auch und Bremsrollen auf, um schlussendlich zu verhindern, dass zum Beispiel Transportboxen mit zu hoher Geschwindigkeit gegen den am unteren Ende des Durchlaufkanals angeordneten Anschlag laufen und dort zu Beschädigungen am Transportgut oder am Durchlaufkanal führen.

Wenn aber zum Beispiel in einem Durchlaufkanal insbesondere Transportboxen mit unterschiedlichem Gewicht gefördert werden sollen, so kommen bei gleicher Bremsleistung die schweren Transportboxen mit einer höheren kinetischen Energie am unteren Anschlag des Durchlaufkanals an, als das im Gegensatz dazu bei leichteren Transportboxen der Fall ist. Rollenbahnen weisen auch sogenannte Trenneinrichtungen auf, die dafür sorgen, dass die einzelnen Transportboxen im Durchlaufkanal zeitlich versetzt an den unteren Anschlag des Durchlaufkanals gelangen. Wenn ein solcher Durchlaufkanal beispielsweise durch die Wahl und/oder Anzahl der Bremsrollen zum Transport von schweren Transportboxen ausgebildet ist, kann es vorkommen, dass dann, wenn leichte, also zum Beispiel leere Transportboxen in dem Durchlaufkanal gefördert werden und durch die Trenneinrichtung solche leeren Transportboxen separiert werden müssen, nach Freigabe durch die Trenneinrichtung die Transportboxen nicht mehr anlaufen, sondern vielmehr an Ort und Stelle verbleiben, eben weil das Losbrechmoment, das die entsprechenden Bremsrollen benötigen, um die entsprechende Transportbox freizugeben, zu groß ist.

Der Erfindung liegt die Aufgabe zugrunde, einen Durchlaufkanal bereitzustellen, bei dem das Auftreten der oben genannten Probleme vermieden wird. Das heißt, es soll ein weitgehend automatisierter Ablauf beim Transport von unterschiedlich schweren Transportgütern, insbesondere unterschiedlich schweren Transportboxen, gewährleistet werden können.

Zur Lösung der Aufgabe ist erfindungsgemäß vorgesehen, dass die erste und zweite Rollenbahn in Richtung auf die Unterseite des Durchlaufkanals federnd nachgiebig in dem Durchlaufkanal gelagert ist,
wobei der Durchlaufkanal zwischen den beiden Rollenbahnen mindestens eine dritte Rollenbahn aufweist, die mindestens eine Bremsrolle aufweist, die in Richtung auf die Unterseite des Durchlaufkanals in der Höhe beabstandet zu den beiden ersten und zweiten Rollenbahnen verläuft, wobei im eingefederten Zustand der ersten und der zweiten Rollenbahn sich die Oberseite der ersten und der zweiten Rollenbahn in etwa auf gleicher Höhe mit der Oberseite der dritten Rollenbahn befindet.

Hierdurch wird erreicht, dass die leichten Transportboxen auf der ersten und der zweiten Rollenbahn gefördert werden können und entsprechend ihrem spezifischen Gewicht auf den beiden äußeren Rollenbahnen abgebremst werden. Werden durch den Durchlaufkanal entsprechend schwerere Transportboxen gefördert, werden bei entsprechendem Gewicht die erste und zweite Rollenbahn soweit einfedern, bis zum Beispiel die Transportbox mit ihrer Unterseite in Kontakt mit der Oberseite einer zwischen der ersten und zweiten Rollenbahn im Durchlaufkanal angeordneten dritten Rollenbahn gelangt, die eine bevorzugt allerdings mehrere Bremsrollen aufweist. Diese Bremsrolle oder Bremsrollen der dritten Rollenbahn, deren Oberseite mit der jeweiligen Oberseite der ersten und zweiten Rollenbahn im eingefederten Zustand korreliert, üben dann eine entsprechend dem zusätzlichen Gewicht der Transportbox zusätzliche Bremskraft auf die Transportbox auf. Somit wird hiermit die Möglichkeit eröffnet, in einem Durchlaufkanal beispielsweise Transportboxen unterschiedlichen Gewichts entsprechend ihrem unterschiedlichen Gewicht abzubremsen, um so zu verhindern, dass zum Beispiel schwere Transportboxen insbesondere mit wesentlich zu hoher kinetischer Energie am unteren Anschlag auflaufen.

Gleichzeitig wird hierdurch erreicht, dass für leichtere Transportboxen auf den beiden äußeren ersten und zweiten Rollenbahnen das Losbrechmoment der Bremsrolle oder Bremsrollen wesentlich geringer sein kann, als dies der Fall ist, wenn eine schwere Transportbox entlang einer schiefen Ebene gefördert wird. Das heißt, nach einer Separierung durch die Trenneinrichtung werden die entsprechenden Transportboxen leichter anlaufen. Bei vergleichsweise schwereren Transportboxen wirken nicht nur die Bremsrollen der beiden äußeren Rollenbahnen auf die Transportbox ein, sondern zusätzlich noch die Bremsrollen der dritten Rollenbahn, die sich zwischen den beiden äußeren Rollenbahnen befindet. Das heißt, die leichten, zum Beispiel leeren Transportboxen werden durch Bremsrollen in der ersten und zweiten Rollenbahn, die im Verhältnis dazu schweren Transportboxen zusätzlich durch die Bremsrollen der mittleren, dritten Rollenbahn abgebremst.

Wenn in diesem Zusammenhang nicht nur zwei unterschiedlich schwere Transportgüter, insbesondere Transportboxen, in einem Durchlaufkanal gefördert werden, sondern drei oder vier, dann kann vorgesehen sein, dass zwischen der ersten und der zweiten Rollenbahn mehrere weitere Rollenbahnen in dem Durchlaufkanal angeordnet sind. In diesem Zusammenhang ist insbesondere vorgesehen, dass die weiteren Rollenbahnen in der Höhe, das heißt in Richtung auf die Unterseite des Durchlaufkanals zu, zumindest abgesetzt und seitlich beabstandet zueinander in dem Durchlaufkanal angeordnet sind, wobei jede der weiteren Rollenbahnen mindestens eine Bremsrolle aufweist. Bis auf die unterste Rollenbahn federn die weiteren Rollenbahnen zwischen den äußeren Rollenbahnen alle um ein vorbestimmtes Maß ein.

Es ergibt sich insofern eine im Wesentlichen kaskadierte oder abgestufte Anordnung der Mehrzahl an Rollenbahnen, wobei eine jede Kaskade, beginnend mit den äußeren Rollenbahnen, für Transportboxen eines bestimmten Gewichtes zuständig ist. Hierbei sind alle Rollenbahnen, bis auf die am tiefsten liegende letzte Rollenbahn, einfedernd, sodass auch diese Rollenbahn bei der schwersten Transportbox ihre Bremswirkung mit ihren Bremsrollen ausüben kann.

Für die Ausbildung der einzelnen Rollenbahnen ist erfindungsgemäß vorteilhaft vorgesehen, dass eine Rollenbahn mehrere, in Längsrichtung hintereinander angerordnete, im Querschnitt U-profilförmige Schienen aufweist, wobei durch die Schienen jeweils mindestens eine Tragrolle und/oder Bremsrolle aufnehmbar sind. Durch die Segmentierung der Rollenbahn in ihrer Länge in einzelne im Querschnitt U-förmige Schienen, wird vorteilhaft erreicht, dass vom Grundsatz her während des Fördervorgangs die Schienen mit Transportboxen unterschiedlichen Gewichts belegbar sind, wenn entsprechende Abstände zwischen den Transportboxen eingehalten werden. Das heißt es besteht die Möglichkeit, beispielsweise zunächst eine leere Transportbox durch den Durchlaufkanal zu schicken, um dann, wenn diese erste leere Transportbox einen gewissen Abstand, der abhängig ist von der Länge der einzelnen Schienen, zum Aufgabeende aufweist, eine weitere im Vergleich zur leeren Transportbox schwerere Transportbox am oberen Ende in Bewegung gesetzt wird, die dann nicht nur durch die Bremsrollen der beiden äußeren Rollenbahnen gebremst wird, sondern zusätzlich noch nach Einfederung der äußeren ersten und zweiten Rollenbahn durch die Bremsrollen der dritten zwischen den beiden Rollenbahnen liegenden weiteren Rollenbahn abgebremst wird.

Bevorzugt kann in diesem Zusammenhang vorgesehen sein, dass die einzelnen Schienen auf Federn auf einem Tragprofil des Durchlaufkanals angeordnet sind. Hieraus wird deutlich, dass die Schienen einer Rollenbahn entsprechend der gewünschten Federkraft zwei oder mehr Federn auf der Unterseite der jeweiligen Schiene aufweisen. Die Schienen sind hierbei durch die Federn mit dem entsprechend darunter befindlichen Tragprofil des Durchlaufkanals verbunden.

Insbesondere dann, wenn nach einer Ausführungsform die Federn als Blattfedern ausgebildet sind, kann durch die Verwendung derartiger Blattfedern gleichzeitig eine gewisse Stabilität der Schienen auf dem Tragprofil erreicht werden. Das heißt, die Schienen werden insbesondere seitlich durch die Blattfedern auf dem Tragprofil geführt.

Denkbar wäre auch der Einsatz von Spiralfedern, diese könnten allerdings nur geringe Seitenführungskräfte aufbringen.

Insbesondere hat sich in diesem Zusammenhang die Verwendung einer Blattfeder als vorteilhaft herausgestellt, bei der die Blattfeder zwei beabstandet zueinander angeordnete Federarme aufweist, zwischen denen ein Tragelement angeordnet ist. Mit den Federarmen ist die Blattfeder auf dem entsprechenden Tragprofil befestigt, beispielsweise verschraubt. Die Federarme sind gegenüber dem Tragelement um einen Winkel von < 90° abgewinkelt, zum Beispiel abgekantet. Das Maß der Abwinkelung korreliert hierbei mit dem Federweg der Schienen, die auf dem Tragelement der Blattfeder zum Beispiel durch Schrauben befestigt sind.

Die Federkraft der Blattfedern ist hierbei in Abhängigkeit von den unterschiedlichen Gewicht des oder der in dem Durchlaufkanal geförderten Transportgüter, also beispielsweise den Transportboxen wählbar.

Anhand der Zeichnungen wird die Erfindung beispielhaft näher erläutert.

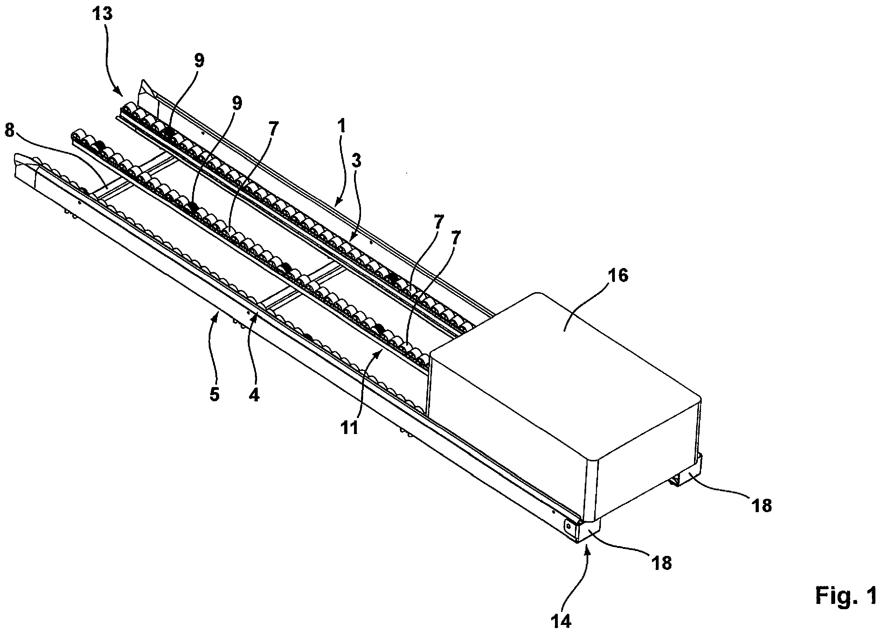

- Fig. 1: zeigt perspektivisch einen Durchlaufkanal mit in dem Durchlaufkanal einsitzender Transportbox;

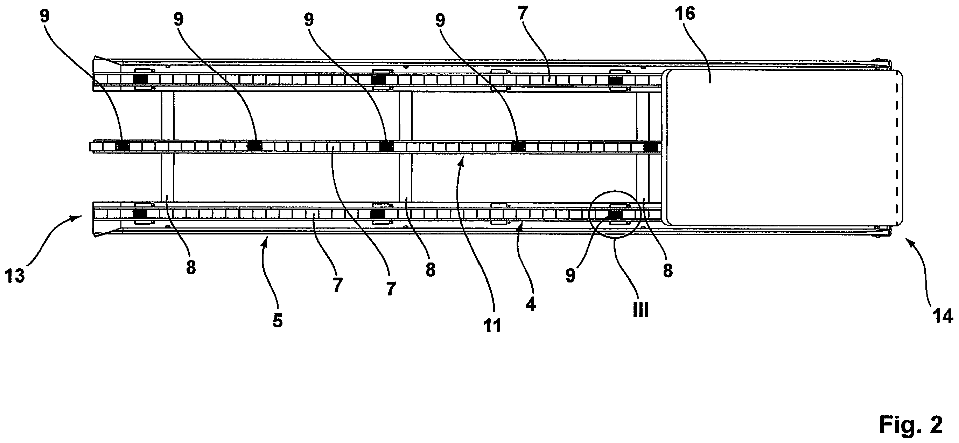

- Fig. 2: zeigt eine Draufsicht auf den Durchlaufkanal gemäß Fig. 1;
- Fig. 3: zeigt die Einzelheit III aus Fig. 2 in einer Draufsicht;
- Fig. 4: zeigt eine Seitenansicht der Darstellung gemäß Fig. 3;
- Fig. 5: zeigt in perspektivischer Darstellung die Blattfeder zur Lagerung einer im Querschnitt U-profilförmigen Schiene zur Aufnahme von Brems- und/oder Tragrollen.

Der mit 1 bezeichnete Durchlaufkanal umfasst die erste Rollenbahn 3 sowie die zweite Rollenbahn 4, die seitlich beabstandet zueinander, aber auf gleicher Höhe jeweils durch ein L-förmiges Tragprofil 5 aufgenommen sind. Die L-förmigen Tragprofile 5 sind durch mehrere im Querschnitt U-profilförmige als Traversen fungierende Tragprofile 8 miteinander verbunden.

Die Rollenbahn 3 sowie die Rollenbahn 4 zeigen über ihre Länge verteilt zwischen den Tragrollen 7 Bremsrollen 9.

Der Durchlaufkanal 1 besitzt darüber hinaus zwischen den beiden Rollenbahnen 3 und 4 nach unten abgesetzt eine weitere, dritte Rollenbahn 11, die ebenfalls über Tragrollen 7 und Bremsrollen 9 verfügt und die auf ein oder mehreren der U-förmigen Tragprofile 8 lagert.

Der Durchlaufkanal 1 weist eine Aufgabeseite 13 und eine Entnahmeseite 14 für die Transportbox 16 auf, die im Bereich der Entnahmeseite 14 durch einen Anschlag 18 an der jeweiligen Rollenbahn 3, 4 gehalten wird. Zur Aufnahme durch den Anschlag 18 besitzt die Transportbox 16 im Bereich des Anschlags eine winklige Aussparung, sodass die Transportbox mit einem Teil ihrer Seitenwandung über den Anschlag 18 übersteht.

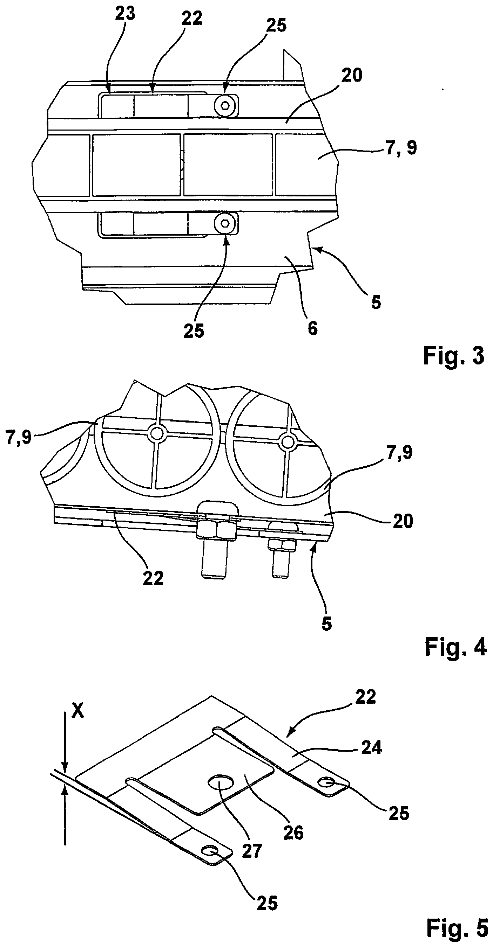

Aus Figuren 3 bis 5 ergibt sich nun die federnde Lagerung der im Querschnitt U-profilförmigen Schiene 20 der jeweiligen Rollenbahn 3, 4 auf dem horizontalen Schenkel 6 des L-förmigen Tragprofils 5. Die federnde Lagerung umfasst die Blattfeder 22, die die beiden Federarme 24 zeigt, die auf dem horizontalen Schenkel des L-förmigen Tragprofils 5 angeordnet sind. Im Einzelnen befindet sich zwischen den beiden mit 24 bezeichneten Federarmen das mit 26 bezeichnete Tragelement, das eine Bohrung 27 zur Fixierung der darauf liegenden, im Querschnitt U-profilförmig ausgebildeten Schiene 20 aufweist. Zur Erzielung der Federwirkung sind die beiden Federarme 24, zwischen denen das Tragelemente 26 lagert, um einen Winkel von < 90° abgewinkelt, wobei der Grad der Abwinkelung im Wesentlichen den Federweg widerspiegelt. In diesem Zusammenhang wird auf die Fig. 4 verwiesen, aus der einerseits die Schiene 20 erkennbar ist, der horizontale Schenkel 6 des L-förmigen Tragprofils 5 sowie auch die Trag- und Bremsrollen 7, 9, die, wie bereits ausgeführt, durch die im Querschnitt U-profilförmige Schiene 20 aufgenommen sind. Der Federweg X ergibt sich durch den Grad der Abwinkelung der Federarme 24. Um zu gewährleisten, dass der Federweg X vollständig ausgenutzt werden kann, das heißt soweit ausgenutzt werden kann, bis die Schiene 20 nahzu plan auf dem horizontalen Schenkel 6 des L-förmigen Tragprofils 5 aufliegt, ist unter der Blattfeder 22 im abgeknickten Bereich der Blattfeder im horizontaler Schenkel 6 eine Freimachung 23 oder Ausnehmung vorgesehen. Das heißt, die Schiene 20 ist keinen Biegemomenten unterworfen, und liegt insofern stabil auf dem Tragprofil 5 auf.

Die Fixierung der Blattfeder 22 auf dem horizontalen Schenkel 6 des L-förmigen Tragprofils 5 erfolgt durch die Anordnung von Schrauben in den Bohrungen 25 der Federarme 24.

### Bezugszeichenliste:

- 1: Durchlaufkanal
- 3: erste Rollenbahn
- 4: zweite Rollenbahn
- 5: L-förmiges Tragprofil
- 6: horizontaler Schenkel des L-förmigen Tragprofils
- 7: Tragrolle
- 8: U-profilförmiges Tragprofil
- 9: Bremsrolle
- 11: dritte Rollenbahn
- 13: Aufgabeseite
- 14: Entnahmeseite
- 16: Transportbox
- 18: Anschlag
- 20: U-profilförmige Schiene (zur Aufnahme von Rollen)
- 22: Blattfeder
- 23: Freimachung
- 24: Federarm
- 25: Bohrung (im Federarm)
- 26: Tragelement der Blattfeder (für Schiene 20)
- 27: Bohrung (im Tragelement)
- X: Federweg

## Patentansprüche

1. Durchlaufregal mit mindestens einem Durchlaufkanal (1) für den Transport von Transportgütern, wobei der mindestens eine Durchlaufkanal (1) mindestens zwei seitlich beabstandet zueinander angeordnete erste und zweite Rollenbahnen (3, 4) aufweist, wobei eine jede Rollenbahn (3,4) zumindest eine Bremsrolle (9) aufweist, **dadurch gekennzeichnet,**
**dass** die erste und zweite Rollenbahn (3, 4) in Richtung auf die Unterseite des Durchlaufkanals (1) federnd nachgiebig in dem Durchlaufkanal (1) gelagert ist, wobei der Durchlaufkanal (1) zwischen den beiden Rollenbahnen (3,4) mindestens eine dritte Rollenbahn (11) aufweist, die mindestens eine Bremsrolle (9) aufweist, wobei die dritte Rollenbahn (11) in Richtung auf die Unterseite des Durchlaufkanals (1) in der Höhe beabstandet zu den beiden ersten und zweiten Rollenbahnen (3, 4) verläuft, wobei im eingefederten Zustand der ersten und der zweiten Rollenbahn (3,4) sich die Oberseite der ersten und der zweiten Rollenbahn (3,4) auf gleicher Höhe mit der Oberseite der dritten Rollenbahn (11) befindet.

2. Durchlaufregal nach Anspruch 1,
**dadurch gekennzeichnet,**
**dass** eine Rollenbahn (3, 4, 11) mehrere hintereinander angeordnete im Querschnitt U-profilförmige Schienen (20) aufweist, wobei durch die Schienen (20) jeweils mindestens eine Tragrolle (7) und/oder jeweils mindestens eine Bremsrolle (9) aufnehmbar ist.

3. Durchlaufregal nach Anspruch 2,
**dadurch gekennzeichnet,**
**dass** die einzelnen U-profilförmigen Schienen (20) auf Federn auf einem Tragprofil (5) des Durchlaufkanals (1) angeordnet sind.

4. Durchlaufregal nach Anspruch 3,
**dadurch gekennzeichnet,**
**dass** die Feder als Blattfeder (22) ausgebildet ist.

5. Durchlaufregal nach Anspruch 4,
**dadurch gekennzeichnet,**
**dass** die Blattfeder (22) zwei beabstandet zueinander angeordnete Federarme (24) aufweist, zwischen denen ein Tragelement (26) für die Schiene (20) angeordnet ist.

6. Durchlaufregal nach Anspruch 5,
**dadurch gekennzeichnet,**
**dass** die Federarme (24) relativ zum Tragelement (26) um einen Winkel von < 90° abgewinkelt sind.

7. Durchlaufregal nach einem der Ansprüche 4 bis 6,
**dadurch gekennzeichnet,**
**dass** die Federkraft der Blattfedern (22) in Abhängigkeit von dem unterschiedlichen Gewicht des oder der in dem Durchlaufkanal (1) geförderten Transportgüter wählbar ist.

## Claims

1. A flow rack having at least one flow passage (1) for the transport of transport goods, wherein the at least one flow passage (1) has at least two first and second roller conveyors (3, 4) arranged laterally spaced apart from one another, wherein each roller conveyor (3, 4) has at least one brake roller (9),
**characterized in that**
the first and second roller conveyors (3, 4) are supported in the flow passage (1) in a resiliently yielding manner in the direction toward the lower side of the flow passage (1), with the flow passage (1) having at least one third roller conveyor (11) between the two roller conveyors (3, 4) that has at least one brake roller (9), with the third roller conveyor (11) extending in the direction toward the lower side of the flow passage (1) at a height spaced apart from the two first and second roller conveyors (3, 4), with the upper sides of the first and second roller conveyors (3, 4) being at the same height as the upper side of the third roller conveyor (11) in the deflected state of the first and second roller conveyors (3, 4).

2. A flow rack in accordance with claim 1,
**characterized in that**
a roller conveyor (3, 4, 11) has a plurality of rails (20) that are arranged behind one another and have the shape of a U section in cross-section, with at least one respective carrier roller (7) and/or at least one respective brake roller (9) being able to be received by the rails (20).

3. A flow rack in accordance with claim 2,
**characterized in that**
the individual rails (20) having the shape of a U section are arranged on springs on a carrier section (5) of the flow passage (1).

4. A flow rack in accordance with claim 3,
**characterized in that**
the spring is configured as a leaf spring (22).

5. A flow rack in accordance with claim 4,
**characterized in that**
the leaf spring (22) has two spring arms (24) that are arranged spaced apart from one another and between which a carrier element (26) for the rail (20) is arranged.

6. A flow rack in accordance with claim 5,
**characterized in that**
the spring arms (24) are angled by an angle of < 90° relative to the carrier element (26).

7. A flow rack in accordance with one of the claims 4 to 6,
**characterized in that**
the spring force of the leaf springs (22) is selectable in dependence on the different weight of the transport good or goods conveyed in the flow passage (1).

## Revendications

1. Rayonnage dynamique comprenant au moins un canal de passage (1) pour le transport de produits à transporter, l'au moins un canal de passage (1) comportant au moins deux, un premier et un deuxième, transporteurs à rouleaux (3, 4) disposés latéralement espacés l'un de l'autre, chaque transporteur à rouleaux (3, 4) comportant au moins un rouleau ralentisseur (9),
**caractérisé en ce que**
le premier et le deuxième transporteur à rouleaux (3, 4) sont montés dans le canal de passage (1) de manière élastiquement déformable en direction de la face inférieure du canal de passage (1), le canal de passage (1) comportant, entre les deux transporteurs à rouleaux (3, 4), au moins un troisième transporteur à rouleaux (11) qui comporte au moins un rouleau ralentisseur (9), le troisième transporteur à rouleaux (11) s'étendant espacé dans le sens de la hauteur des deux, le premier et le deuxième, transporteurs à rouleaux (3, 4) en direction de la face inférieure du canal de passage (1), la face supérieure du premier et du deuxième transporteur à rouleaux (3, 4) se trouvant à la même hauteur que la face supérieure du troisième transporteur à rouleaux (11) dans l'état défléchi du premier et du second transporteur à rouleaux (3, 4).

2. Rayonnage dynamique selon la revendication 1,
**caractérisé en ce que**
un transporteur à rouleaux (3, 4, 11) comporte plusieurs rails (20) dont la coupe transversale est en forme de profilé en U, disposés les uns derrière les autres, respectivement au moins un rouleau porteur (7) et/ou respectivement au moins un rouleau ralentisseur (9) pouvant être reçu par les rails (20).

3. Rayonnage dynamique selon la revendication 2,
**caractérisé en ce que**
les différents rails (20) en forme de profilé en U sont disposés sur des ressorts sur un profilé porteur (5) du canal de passage (1).

4. Rayonnage dynamique selon la revendication 3,
**caractérisé en ce que**
le ressort est réalisé sous la forme d'un ressort à lame (22).

5. Rayonnage dynamique selon la revendication 4,
**caractérisé en ce que**
le ressort à lame (22) comporte deux bras ressorts (24) disposés espacés l'un de l'autre, entre lesquels est disposé un élément de support (26) pour le rail (20).

6. Rayonnage dynamique selon la revendication 5,
**caractérisé en ce que**
les bras ressorts (24) sont coudés selon un angle de < 90° par rapport à l'élément de support (26).

7. Rayonnage dynamique selon l'une des revendications 4 à 6, **caractérisé en ce que**
la force de ressort des ressorts à lame (22) peut être choisie en fonction du poids différent du ou des produit(s) à transporter qui est/sont transporté(s) dans le canal de passage (1).
